# EUROPÄISCHE PATENTSCHRIFT

(11) **EP 0 731 315 B1**
(45) Veröffentlichungstag und Bekanntmachung des Hinweises auf die Patenterteilung: **03.11.1999**
(21) Anmeldenummer: 96810122.0
(22) Anmeldetag: 05.03.1996
(51) Int. Cl.: F23D 11/38, F23D 11/26, B05B 1/30

(54) **Düsenabschlussventil sowie Druckzerstäuberdüse mit einem solchen Düsenabschlussventil**
Nozzle shut-off valve and pressure spray nozzle with such a shut-off valve
Soupape de fermeture pour une buse et buse de pulvérisation sous pression avec une telle soupape de fermeture

(30) Priorität: 06.03.1995 CH 63695
(43) Veröffentlichungstag der Anmeldung: 11.09.1996
(73) Patentinhaber: SATRONIC AG, CH-8157 Dielsdorf (CH)
(72) Erfinder: Caminada, Marcel, 8172 Niederglatt (CH)
(74) Vertreter: Hug Interlizenz AG

(56) Entgegenhaltungen:
- EP-A- 0 230 150
- EP-A- 0 433 143
- EP-A- 0 566 855
- DE-A- 3 320 270
- DE-C- 3 901 032
- FR-A- 1 577 740
- FR-A- 2 184 247
- US-A- 5 323 807

## Beschreibung

### TECHNISCHES GEBIET

Die vorliegende Erfindung bezieht sich auf das Gebiet der Verbrennungstechnik. Sie betrifft ein Düsenabschlussventil für die Druckzerstäuberdüse eines Oelbrenners gemäss dem Oberbegriff des Anspruchs 1.

Sie betrifft weiterhin eine Druckzerstäuberdüse für einen Oelbrenner gemäss dem Oberbegriff des Anspruchs 11.

Eine solches Düsenabschlussventil und eine solche Druckzerstäuberdüse sind beispielsweise aus der Druckschrift DE-A1-33 08 153 der Anmelderin bekannt.

### STAND DER TECHNIK

Bei ölbetriebenen Heizungsanlagen, bei denen das zu verbrennende Heizoel unter einem Druck von mehreren (etwa 5) bar durch eine Druckzerstäuberdüse in den Brennerraum eingespritzt und dabei zerstäubt wird, kann es, wenn keine besonderen Vorkehrungen getroffen werden, beim Abschalten des Brenners zu einem strahlartigen Austreten oder Nachtröpfeln von Oel aus der Druckzerstäuberdüse kommen. Ein derartiges Nachtröpfeln führt in der Abstellphase und in der anschliessenden Startphase zu einem Ueberschuss an Heizoel im Brennraum, der sich in Form von unverbrannten Kohlenwasserstoffen im Abgas bemerkbar macht und die Emissionswerte der Heizanlage erheblich verschlechtert. Dieselben unerwünschten Auswirkungen ergeben sich, wenn infolge einer Erwärmung des in der Zuleitung zur Düse stehenden Oeles eine Volumenausdehnung erfolgt, die zu einem Druckaufbau in der Leitung und zu einer Abgabe von Oel aus der Düsenöffnung führt.

Es ist daher in der eingangs genannten Druckschrift bereits vorgeschlagen worden, die Druckzerstäuberdüse einer Heizungsanlage mit einem selbsttätig umschaltbaren Absperrventil auszurüsten. Ein solches Absperrventil, welches mit einer federnd vorgespannten Kugel als Absperrorgan arbeitet und direkt in die Düse eingesetzt ist, verschliesst bei starkem Druckabfall, wie er beim Abschalten auftritt, in der Oelzufuhrleitung den Oelfluss direkt an der Düse, so dass die in der Zuleitung zwischen dem Magnetventil und der Düse vorhandenen Oelvolumina nach dem Abschalten nicht mehr aus der Düse austreten können.

Bei dem bekannten Absperrventil wird die Ventilkugel, die direkt auf einem metallischen Ventilsitz aufliegt, durch eine membranartige Springfeder vorgespannt, die zwischen zwei Endlagen hin- und herspringen kann und damit eine extrem nichtlineare Kennlinie aufweist. Durch den Einsatz der Springfeder wird erreicht, dass das Ventil beispielsweise bei einem Oeffnungsdruck von 7-9 bar öffnet, aber erst bei einem Schliessdruck von üblicherweise 4 bar wieder schliesst. Diese Hysterese im Ventilverhalten hat den Vorteil, dass, wenn der Oeffnungsdruck beim Anfahren der Oelpumpe einmal kurzzeitig erreicht wird und das Ventil öffnet, anschliessend bei einem wesentlich niedrigeren Arbeitsdruck eingedüst werden kann, so dass die Oelpumpe leistungsmässig wesentlich günstiger ausgelegt werden kann.

Problematisch ist bei dem bekannten Ventil jedoch, dass in der Praxis ein Springfeder mit einer genau vorgegebenen Springcharakteristik nur sehr schwer herzustellen ist, zumal die Feder nur einen Durchmesser von wenigen Millimetern aufweist. Darüber hinaus lässt sich durch das Zusammenwirken der metallischen Ventilkugel mit dem metallischen Ventilsitz nur schwer eine ausreichende Dichtigkeit des Ventils erreichen.

Es ist andererseits bei einer Druckluft-Oelzerstäuberdüse ein in der Düse angeordnetes Ventil vorgeschlagen worden, bei welchem als Absperrorgan eine Membran eingesetzt wird, die von einer (linearen) Spiralfeder vorgespannt wird (EP-A1-0 566 855). Die Spiralfeder ist in einem Federraum untergebracht, der zwar auf der einen Seite durch die Membran abgedichtet wird, auf der anderen Seite jedoch durch eine Entlastungsöffnung mit der Düsenöffnung in Verbindung steht. Damit kann während des Betriebes grundsätzlich Oel in den Federraum eindringen und - da der Federraum hinter dem Ventil angeordnet ist - nach dem Abschalten aus der Düse austreten. Tatsächlich dringt in der Praxis nur wenig Oel in den Federraum ein. Dies hängt aber damit zusammen, dass bei der Druckluft-Oelzerstäuberdüse der EP-A1-0 566 855 - anders als der bei der ohne Druckluft arbeitenden Druckzerstäuberdüse der DE-A1-33 08 153 - durch die Druckluft eine Sogwirkung im Bereich der Düsenöffnung erzeugt wird, die eventuell in den Federraum eintretendes Oel sofort absaugt.

### DARSTELLUNG DER ERFINDUNG

Es ist daher Aufgabe der Erfindung, ein Ventil zu schaffen, welches einerseits leicht und mit einer reproduzierbaren Ventilcharakteristik herstellbar ist und die gewünschte Hysterese in der Ventilcharakteristik zeigt, und welches andererseits nur geringe schädliche Volumina aufweist, in denen sich nachtropfendes Oel sammeln kann.

Die Aufgabe wird durch die Gesamtheit der Merkmale des Anspruchs 1 gelöst.

Die (elastische) Membran führt im Zusammenspiel mit dem (metallischen) Ventilsitz zu einer ausgezeichneten Dichtigkeit des Ventils. Die Kombination aus Membran und linearer Feder erzeugt aus folgendem Grund die gewünschte Hysterese: Der Membransitz, d.h., der Randbereich, auf welchem die Membran aufliegt, umschliesst eine deutlich grössere Fläche als der Ventilsitz, gegen den die Membran durch die erste Feder dichtend gepresst wird. Solange das Ventil geschlossen ist, wirkt der Oeldruck auf die kleinere, vom Ventilsitz umschlossene Fläche der Membran. Oeffnet das Ventil, wirkt der Druck auf die grössere, durch den Membransitz unterstütze Fläche der Membran. Damit wirkt auf die erste Feder eine im Verhältnis der beiden Flächen höhere Kraft, so dass die Membran mit einem geringeren Druck in der Oeffnungsstellung gehalten werden kann. Die Ausbildung des Federraums als eines durch die Membran abgeschlossenen Raumes sorgt dafür, dass der Federraum nur mit einem kompressiblen Medium gefüllt ist, nicht jedoch mit Oel, welches nach dem Schliessen des Ventils noch aus der Düse austreten könnte.

Eine erste bevorzugte Ausführungsform des erfindungsgemässen Ventils zeichnet sich dadurch aus, dass die Oeffnung des Federraumes durch einen umlaufenden Membransitz berandet wird, auf welchem die Membran mit ihrem rückseitigen Randbereich aufliegt, und dass die Membran mittels einer zweiten Feder gegen den Membransitz gepresst wird. Hierdurch wird erreicht, dass selbst bei gewissen unvermeidlichen Toleranzen der Membran und des Membransitzes eine sichere Abdichtung gewährleistet ist. Zur Vergleichmässigung des Druckes der zweiten Feder auf die Membran kann gemäss einer bevorzugten Weiterbildung zwischen der Membran und der zweiten Feder ein Zwischenring, vorzugsweise aus Metall, angeordnet sein.

Eine zweite bevorzugte Ausführungsform des Ventils nach der Erfindung zeichnet sich dadurch aus, dass die erste Feder als Spiralfeder ausgebildet ist und auf einen Druckbolzen einwirkt, welcher seinerseits mit einer Stirnseite auf die Membran Druck ausübt, und dass die Stirnseite des Druckbolzens konvex geformt ist. Die Spiralfeder kann auf einfache Weise mit einer sehr genauen Federcharakteristik hergestellt werden. Der Druckbolzen mit seiner konvexen Stirnseite leitet die Federkraft flächig in die Membran ein und vermeidet punktuelle Belastungen, die zu einer Beschädigungen der Membran führen könnten.

Eine weitere bevorzugte Ausführungsform des erfindungsgemässen Ventils zeichnet sich dadurch aus, dass die Einzelelemente ein zylinderringförmiges Ventilgehäuse umfassen, welches auf der einen Seite durch ein fest aufgesetztes Filter abgeschlossen ist, in das Ventilgehäuse ein Innenteil eingesetzt ist, welches den Einlasskanal als konzentrische Durchgangsbohrung enthält, sich eingangsseitig am Filter abstützt und ausgangsseitig mit dem Ventilsitz ausgestattet ist, in das Ventilgehäuse eine Ventilschraube eingeschraubt ist, welche den Federraum, den daran anschliessenden Membransitz und den seitlich vor dem Membransitz abgehenden Auslass enthält und im eingeschraubten Zustand das Innenteil im Ventilgehäuse fixiert, und das Ventilgehäuse ein Aussengewinde aufweist, mit welchem es in die Druckzerstäuberdüse eingeschraubt werden kann. Durch diese Art des Aufbaus lässt sich das Ventil leicht zusammensetzen und warten sowie leicht in die Düse ein- und ausbauen.

Die erfindungsgemässe Druckzerstäuberdüse wird durch die Gesamtheit der Merkmale des Anspruchs 11 festgelegt.

Gemäss einer bevorzugten Ausführungsform ist das Düsenabschlussventil in das Düsengehäuse eingeschraubt und gegenüber dem Düsengehäuse mit einem zweiten O-Ring abgedichtet.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: im teilweisen Längsschnitt den Einbau eines beispielhaften Ventils nach der Erfindung in eine Druckzerstäuberdüse;
- Fig. 2: im Längsschnitt den inneren Aufbau des Ventils nach Fig. 1; und
- Fig. 3: das Ventil gemäss Fig. 2 mit zusätzlichem Zwischenring zwischen der Membran und der zweiten Feder und einer zusätzlichen Wegbegrenzung des Druckbolzens.

### WEGE ZUR AUSFÜHRUNG DER ERFINDUNG

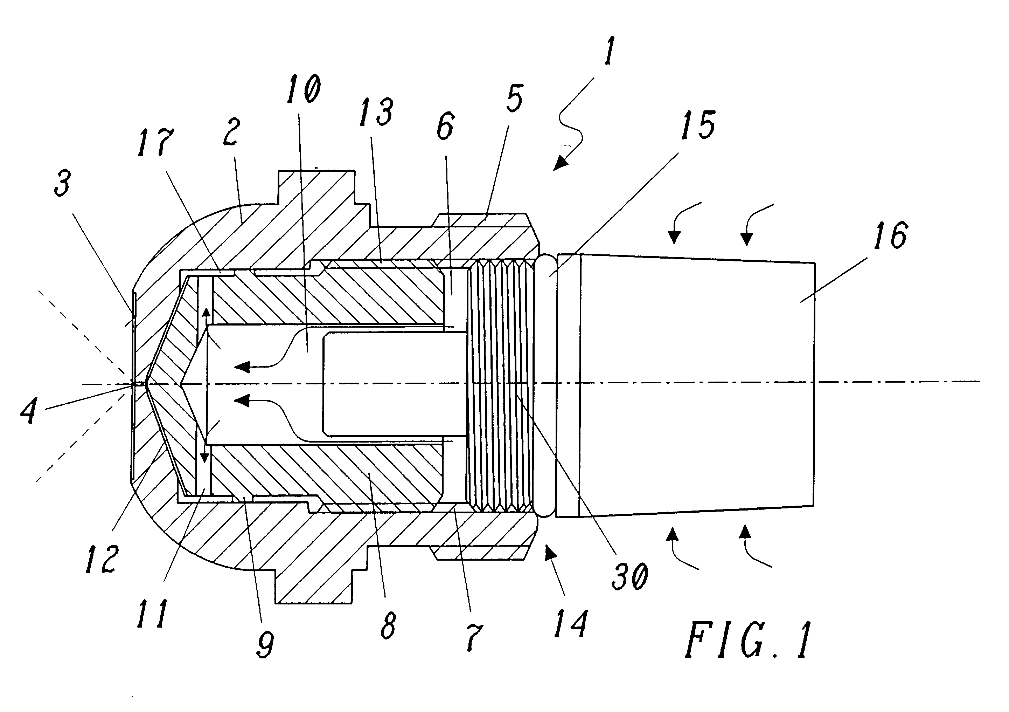

In Fig. 1 ist ein bevorzugtes Ausführungsbeispiel einer Druckzerstäuberdüse mit eingebautem Düsenabschlussventil für einen Oelbrenner wiedergegeben. Die Druckzerstäuberdüse 1 besteht im wesentlichen aus einem Düsengehäuse 2 mit einem sacklochartigen Innenraum 6. Das Düsengehäuse 2 ist auf der Austrittsseite abgeflacht mit einer Düsenfläche 3, in deren Mitte sich eine Düsenbohrung 4 befindet. Die Düsenbohrung, aus der das Oel mit einem Druck von mehreren bar austritt, verbindet den Innenraum 6 der Düse mit dem Aussenraum. In den Innenraum ist ein zylindrischer Kegeleinsatz 8 eingesetzt, der mit seiner kegelförmigen Spitze an den hohlkegelförmigen Boden des Innenraums 6 angepasst ist. Unterhalb der kegelförmigen Spitze ist der Kegeleinsatz 8 im Aussendurchmesser reduziert bis auf einen schmalen, ringförmig umlaufenden Wulst 9, der im Aussendurchmesser dem Innendurchmesser des Innenraums 6 angepasst ist und die Funktion einer Art von Filter übernimmt, um zu verhindern, dass Späne zur Düsenöffnung gelangen. Aufgrund des reduzierten Durchmessers bildet sich zwischen dem Kegeleinsatz 8 und der Wand des Innenraums 6 im Vorderteil der Düse ein ringförmiger Ueberströmraum 17, der über Drallnute 12, die auf der Kegelspitze des Kegeleinsatzes 8 eingearbeitet sind, mit der Düsenbohrung in Verbindung steht.

Der Kegeleinsatz 8 weist im Inneren ein Sackloch 10 auf, welches vom hinteren (rechten) Ende ausgehend bis in den Bereich der Kegelspitze reicht und durch einen oder mehrere Auslasskanäle 11 mit dem Ueberströmraum 17 verbunden ist. Der Kegeleinsatz 8 trägt am hinteren (rechten) Ende ein Aussengewinde 13, mittels dessen er in ein entsprechendes Innengewinde 7 im Innenraum 6 eingeschraubt werden kann. In Strömungsrichtung vor dem Kegeleinsatz ist das Düsenabschlussventil 14 nach der Erfindung angeordnet. Das in der Seitenansicht gezeigte Düsenabschlussventil 14 ist mittels eines Aussengewindes 30 ebenfalls in das Düsengehäuse 2 eingeschraubt und gegen das Gehäuse mit einem O-Ring 15 abgedichtet. Das Düsenabschlussventil 14 ist eingangsseitig mit einem Filter 16 verbunden, welches vorzugsweise aus Sintermetall besteht. Das Düsenabschlussventil 14 ragt mit einem zapfenartigen Fortsatz in das Sackloch 10 des Kegeleinsatzes 8 hinein. Die Druckzerstäuberdüse 1 mit dem eingeschraubten Düsenabschlussventil 14 lässt sich ihrerseits mittels eines Aussengewindes 5 in einen (nicht dargestellten) Oelvorwärmer oder dgl. einschrauben.

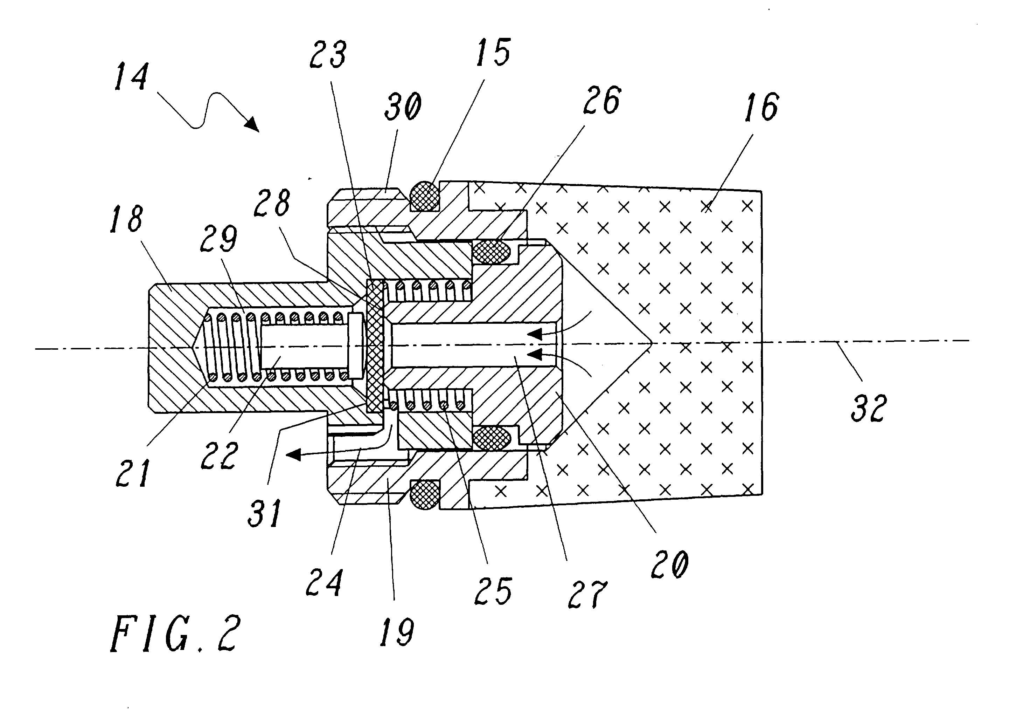

Im Betrieb wird das Oel, welches auf der rechten Seite durch den Filter 16 in das Düsenabschlussventil 14 eintritt, bei geöffnetem Ventil im Bereich hinter dem Einschraubgewinde aus einem in Fig. 1 nicht dargestellten Auslass (24 in Fig. 2) in den Innenraum 6 gelassen. Es strömt von dort in Richtung der eingezeichneten Pfeile durch die Auslasskanäle 11 in den Ueberströmraum 17 und von dort über die Drallnuten 12 in die Düsenbohrung 4, von wo es in Form eines Zerstäubungskegels (strichliert angedeutet) in den Aussenraum (Brennraum) austritt.

Der innere Aufbau des beispielhaften Düsenabschlussventils 14 aus Fig. 1 ist im Längsschnitt in Fig. 2 wiedergegeben: Das Düsenabschlussventil 14 ist aus im wesentlichen rotationssymmetrischen und zu einer Ventilachse 32 konzentrisch angeordneten Einzelelementen 16, 18, 19, 20, 22, 23 zusammengesetzt. Die Einzelelemente umfassen u.a. ein zylinderringförmiges Ventilgehäuse 19, welches auf der einen Seite durch das fest aufgesetzte Filter 16 abgeschlossen ist. In das Ventilgehäuse 19 ist ein Innenteil 20 eingesetzt, welches einen Einlasskanal 27 in Form einer konzentrischen Durchgangsbohrung enthält. Das Innenteil 20 stützt sich eingangsseitig am Filter 16 ab und ist ausgangsseitig mit einem Ventilsitz 28 ausgestattet, welcher den Ausgang des Einlasskanals 27 ringförmig umgibt. In das Ventilgehäuse 19 ist weiterhin eine Ventilschraube 18 eingeschraubt, welche einen Federraum 29, einen daran anschliessenden Membransitz 31 und einen seitlich vor dem Membransitz 31 abgehenden Auslass 24 enthält und im eingeschraubten Zustand das Innenteil 20 im Ventilgehäuse 19 fixiert. Das Ventilgehäuse 19 weist - wie bereits oben erwähnt - ein Aussengewinde 30 auf, mit welchem es in die Druckzerstäuberdüse 1 eingeschraubt werden kann.

Das Absperrorgan des Düsenabschlussventils 14 ist als Membran 23 ausgebildet. Die (elastische) Membran 23, die in den Membransitz 31 eingelegt ist, wird mittels einer hinter der Membran 23 angeordneten ersten Feder 21 dichtend auf den Ventilsitz 28 gedrückt. Sie hebt gegen die Kraft der ersten Feder 21 nur vom Ventilsitz 28 ab, wenn ein vorbestimmter Druck, der Oeffnungsdruck, im Einlasskanal 27 erreicht wird. Die erste Feder 21 ist vorzugsweise als Spiralfeder ausgebildet. Sie besitzt eine im wesentlichen lineare Federcharakteristik. Sie wirkt auf einen Druckbolzen 22 ein, welcher seinerseits mit einer konvex geformten Stirnseite auf die Membran 23 Druck ausübt.

Die erste Feder 21 ist in dem Federraum 29 untergebracht. Der Federraum 29 ist als einseitig offener Raum (Sackloch) ausgebildet, dessen einzige Oeffnung durch die Membran 23 dichtend verschlossen wird. Der Federraum 29 enthält ein kompressibles Medium, das beim Oeffnen des Ventils durch die sich verformende Membran 23 leicht komprimiert werden kann. Aufgrund seiner Abgeschlossenheit kann während des Betriebes in ihn kein Oel eindringen, so dass er im Hinblick auf das Nachtropfen kein schädliches Volumen darstellt. Die Membran 23 liegt mit ihrem rückseitigen Randbereich auf dem Membransitz auf und wird mittels einer zweiten Feder 25, vorzugsweise ebenfalls einer Spiralfeder, gegen den Membransitz 31 gepresst. Hierdurch ist gewährleistet, dass die Membran 23 stets dichtend auf dem Membransitz 31 aufliegt. Die zweite Feder 25 ist in einem ringförmigen Hohlraum untergebracht, der zwischen dem vorderen (linken) Teil des Innenteils 20 und dem hinteren (rechten) Teil der Ventilschraube 18 gebildet wird.

In Strömungsrichtung vor der Membran 23 führt seitlich ein Auslass 24 aus der Ventilschraube 18 und nach vorne aus dem Ventilgehäuse 19 heraus. Das Innenteil 20 ist gegen das Ventilgehäuse 19 mit einem weiteren O-Ring 26 abgedichtet. Das Oel tritt, von der rechten Seite kommend, durch den Filter 16 in den Einlasskanal 27 ein und drückt von dort auf die Membran 23, und zwar auf einer Fläche, die von dem Ventilsitz 28 berandet wird. Mit steigendem Druck biegt sich die Membran 23 nach links durch und drückt den Druckbolzen nach links und die erste Feder 21 zusammen. Ist der Oeffnungsdruck, z.B. 5-7 bar, erreicht, hebt die Membran 23 vom Ventilsitz 28 ab, so dass das Oel den Raum der zweiten Feder 25 erfüllen kann. Das Oel drückt nun auf einer grösseren Fläche, die von dem Membransitz 31 berandet wird, auf die Membran, so dass ein geringerer Druck ausreicht, um dieselbe Federkraft der ersten Feder 21 zu kompensieren. Damit ist der Oeldruck, welcher das Düsenabschlussventil 14 offen hält, deutlich geringer als der Oeffnungsdruck. Das Oel strömt bei abgehobener Membran 23 dann aus dem Auslass 24 in den Innenraum 6 der Druckzerstäuberdüse 1, wie dies oben bereits geschildert worden ist.

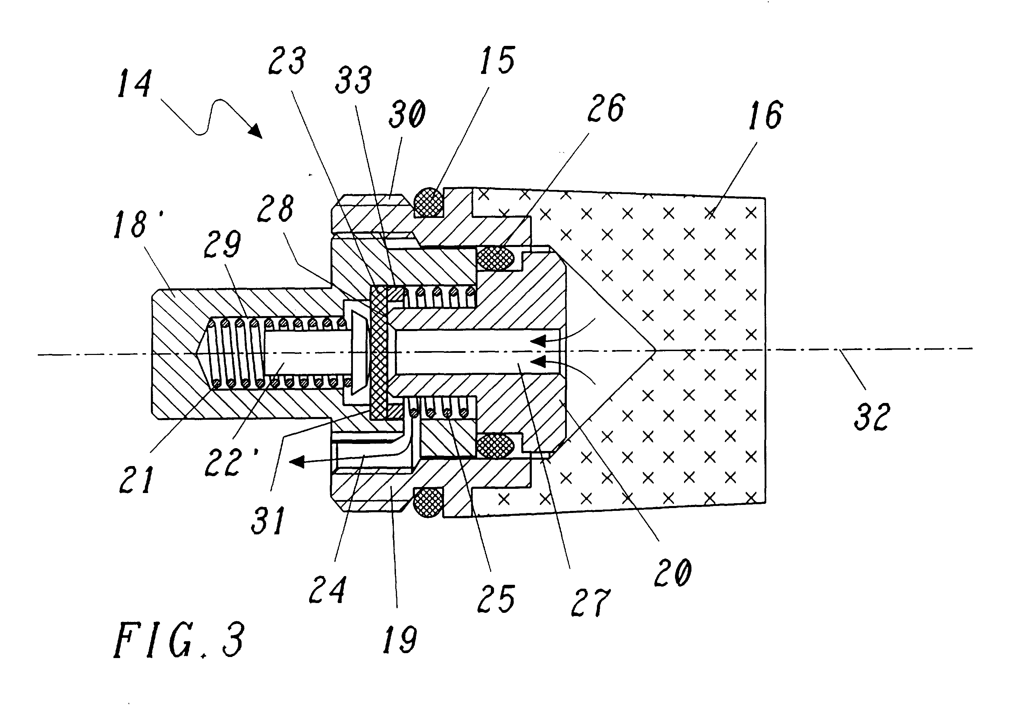

Das in Fig. 3 dargestellte Ausführungsbeispiel des erfindungsgemässen Ventils gleicht im wesentlichen dem in Fig. 2 gezeigten Ventil, so dass auch im wesentlichen die selben Bezugszeichen verwendet werden. Unterschiedlich ist, dass in diesem Beispiel zwischen der Membran 23 und der zweiten Feder 25 ein metallischer Zwischenring 33 angeordnet ist, der den Druck der zweiten Feder 25 auf den Rand der Membran 23 gleichmässiger verteilt und damit den Sitz der Membran 23 im Ventil und die Dichtwirkung bezüglich des Federraums 29 verbessert. Unterschiedlich ist auch, dass der Druckbolzen 22' einen im Durchmesser vergrösserten konvex gerundeten Kopf aufweist, der beim Zurückdrücken des Druckbolzens 22' in Oeffnungsrichtung des Ventils auf einem in der Ventilschraube 18' eingelassenen Absatz aufliegt und damit den Verschiebungsweg des Druckbolzens 22', d.h. das Ventilspiel, begrenzt.

Das Düsenabschlussventil 14 nach der Erfindung bildet eine kompakte, leicht zerlegbare Einheit, die auf einfache Weise zusammengebaut und gewartet werden kann. Der Einbau kann mit geringen Anpassungen bei allen herkömmlichen Düsen erfolgen, so dass auch vorhandene Düsen leicht nachgerüstet werden können. Die gewünschte Ventilcharakteristik lässt sich mittels der Spiralfeder auf unkritische Weise reproduzierbar realisieren. Als Werkstoffe können herkömmliche Materialien eingesetzt werden, wobei im Hinblick auf die Membran auf die nötige Druckfestigkeit und Unempfindlichkeit gegen Oel geachtet werden muss.

### BEZEICHNUNGSLISTE

- 1: Druckzerstäuberdüse
- 2: Düsengehäuse
- 3: Düsenfläche
- 4: Düsenbohrung
- 5: Aussengewinde (Düse)
- 6: Innenraum (Düse)
- 7: Innengewinde (Düse)
- 8: Kegeleinsatz
- 9: Wulst
- 10: Sackloch (Kegeleinsatz)
- 11: Auslasskanal
- 12: Drallnute
- 13: Aussengewinde (Kegeleinsatz)
- 14: Düsenabschlussventil
- 15,26: O-Ring
- 16: Filter (Sintermetall)
- 17: Ueberströmraum
- 18,18': Ventilschraube
- 19: Ventilgehäuse
- 20: Innenteil
- 21,25: Feder
- 22,22': Druckbolzen
- 23: Membran
- 24: Auslass
- 27: Einlasskanal
- 28: Ventilsitz
- 29: Federraum
- 30: Aussengewinde (Ventilgehäuse)
- 31: Membransitz
- 32: Ventilachse
- 33: Zwischenring

## Patentansprüche

1. Düsenabschlussventil (14) für die Druckzerstäuberdüse (1) eines Oelbrenners, umfassend
eine Einlassseite (20, 27) mit einem Einlasskanal (27) und einem am Ende des Einlasskanals (27) angeordneten Ventilsitz (28), sowie
ein Absperrorgan (23), welches mittels einer hinter dem Absperrorgan (23) angeordneten ersten Feder (21) dichtend auf den Ventilsitz (28) gedrückt wird, und gegen die Kraft der ersten Feder (21) vom Ventilsitz (28) abhebt, wenn ein vorbestimmter Druck im Einlasskanal (27) erreicht wird, wobei
das Düsenabschlussventil (14) aus im wesentlichen rotationssymmetrischen und zu einer Ventilachse (32) konzentrisch angeordneten Einzelelementen (16, 18, 19, 20, 22, 23) zusammengesetzt ist, und
das Düsenabschlussventil (14) in ein Düsengehäuse (1) der Druckzerstäuberdüse (1) derart einsetzbar ist, dass das Düsengehäuse (2) koaxial zu der Ventilachse (32) des Düsenabschlussventils (14) angeordnet werden kann,
dadurch gekennzeichnet, dass
das Absperrorgan als Membran (23) ausgebildet ist,
die erste Feder (21) eine im wesentlichen lineare Federcharakteristik aufweist, und
die erste Feder in einem Federraum (29) untergebracht ist, welcher als einseitig offener Raum ausgebildet ist, dessen einzige Oeffnung durch die Membran (23) dichtend verschlossen wird.

2. Druckzerstäuberdüse mit einem Düsengehäuse und einem Düsenabschlussventil nach Anspruch 1, dadurch gekennzeichnet, dass Düsengehäuse (2) und Düsenabschlussventil (14) durch einen O-Ring (15) gegeneinander abgedichtet sind.

3. Düsenabschlussventil nach Anspruch 1, dadurch gekennzeichnet, dass die Oeffnung des Federraumes (29) durch einen umlaufenden Membransitz (31) berandet wird, auf welchem die Membran (23) mit ihrem rückseitigen Randbereich aufliegt, und dass die Membran (23) mittels einer zweiten Feder (25) gegen den Membransitz (31) gepresst wird.

4. Düsenabschlussventil nach Anspruch 3, dadurch gekennzeichnet, dass zwischen der Membran (23) und der zweiten Feder (25) ein Zwischenring (33), vorzugsweise aus Metall, angeordnet ist.

5. Düsenabschlussventil nach einem der Ansprüche 1 und 3, 4 dadurch gekennzeichnet, dass die erste Feder (21) als Spiralfeder ausgebildet ist und auf einen Druckbolzen (22, 22') einwirkt, welcher seinerseits mit einer Stirnseite auf die Membran (23) Druck ausübt.

6. Düsenabschlussventil nach Anspruch 5, dadurch gekennzeichnet, dass die Stirnseite des Druckbolzens (22, 22') konvex geformt ist.

7. Düsenabschlussventil nach einem der Ansprüche 5 und 6, dadurch gekennzeichnet, dass der Verschiebungsweg des Druckbolzens (22') in Oeffnungsrichtung des Ventils begrenzt ist.

8. Düsenabschlussventil nach einem der Ansprüche 1 und 3 bis 7, dadurch gekennzeichnet, dass vor dem Einlasskanal (27) ein Filter (16), vorzugsweise aus einem Sintermetall, angeordnet ist.

9. Düsenabschlussventil nach Anspruch 8, dadurch gekennzeichnet, dass
die Einzelelemente ein zylinderringförmiges Ventilgehäuse (19) umfassen, welches auf der einen Seite durch das fest aufgesetzte Filter (16) abgeschlossen ist,
in das Ventilgehäuse (19) ein Innenteil (20) eingesetzt ist, welches den Einlasskanal (27) als konzentrische Durchgangsbohrung enthält, sich eingangsseitig am Filter (16) abstützt und ausgangsseitig mit dem Ventilsitz (28) ausgestattet ist,
in das Ventilgehäuse (19) eine Ventilschraube (18) eingeschraubt ist, welche den Federraum (29), den daran anschliessenden Membransitz (31) und den seitlich vor dem Membransitz abgehenden Auslass (24) enthält und im eingeschraubten Zustand das Innenteil (20) im Ventilgehäuse (19) fixiert, und
das Ventilgehäuse (19) ein Aussengewinde (30) aufweist, mit welchem es in die Druckzerstäuberdüse (1) eingeschraubt werden kann.

10. Düsenabschlussventil nach Anspruch 9, dadurch gekennzeichnet, dass das Innenteil (20) gegenüber dem Ventilgehäuse (19) durch einen O-Ring (26) abgedichtet ist.

11. Druckzerstäuberdüse (1) für einen Oelbrenner, welche Druckzerstäuberdüse (1) ein Düsengehäuse (2) aufweist, das einen Innenraum (6) in Form eines Sackloches umschliesst, welcher Innenraum (6) im Bodenbereich des Sackloches durch eine Düsenbohrung (4) mit dem Aussenraum in Verbindung steht, dadurch gekennzeichnet, dass in den Innenraum (6) ein Düsenabschlussventil (14) nach einem der Ansprüche 1 und 3 bis 10 derart eingesetzt ist, dass das Düsengehäuse (2) koaxial zu der Ventilachse (32) des Düsenabschlussventils (14) angeordnet ist und gegenüber dem Düsenabschlussventil (14) abgedichtet ist.

12. Druckzerstäuberdüse nach Anspruch 11, dadurch gekennzeichnet, dass das Düsenabschlussventil (14) in das Düsengehäuse (2) eingeschraubt ist und gegenüber dem Düsengehäuse (2) mit einem O-Ring (15) abgedichtet ist.

## Claims

1. A nozzle cutoff valve (14) for the pressure spray nozzle (1) of an oil burner, comprising an inlet side (20, 27) with an inlet duct (27) and a valve seat (28) arranged at the end of the inlet duct (27), and a shut-off member (23) which is pressed in a sealing manner on the valve seat (28) by means of a first spring (21) behind the shut-off member (23) and which lifts off from the valve seat (28) against the force of the first spring (21) when a predetermined pressure in the inlet duct (27) is reached, whereby the nozzle shut-off valve (14) consists of essentially rotationally symmetrical individual elements (16, 18, 19, 20, 22, 23) concentric to a valve axis (32), and that the nozzle shut-off valve (14) can be inserted in a nozzle housing (1) of the pressure spray nozzle (1) so that the nozzle housing (2) can be located coaxial to the valve axis (32) of the nozzle spray valve (14), characterized in that the shut-off member is designed as a membrane (23), the first spring (21) is provided with a substantially linear spring characteristic, and the first spring is housed in a spring chamber (29) which is arranged as a chamber that is open on one side and whose only opening is sealed by the membrane (23).

2. A nozzle cutoff valve with a nozzle housing and a nozzle cutoff valve as claimed in claim 1, characterized in that the nozzle housing (2) and nozzle cutoff valve (14) are sealed from each other by an O-ring (15).

3. A nozzle cutoff valve as claimed in claim 1, characterized in that the opening of the spring chamber (29) is bordered off by a peripheral membrane seat (31) on which the membrane (23) rests with its edge zone on the rear side, and that the membrane (23) is pressed against the membrane seat (31) by means of a second spring (25).

4. A nozzle cutoff valve as claimed in claim 3, characterized in that there is an intermediate ring (33) preferably of metal between the membrane (23) and the second spring (25).

5. A nozzle cutoff valve as claimed in one of claims 1, 3 and 4, characterized in that the first spring (21) is designed as a helical spring and acts upon a pressure bolt (22, 22') which on its part exercises pressure with one face side on the membrane (23).

6. A nozzle cutoff valve as claimed in claim 5, characterized in that the face side of the pressure bolt (22, 22') is shaped convexly.

7. A nozzle cutoff valve as claimed in one of claims 5 and 6, characterized in that the path of displacement of the pressure bolt (22') is limited in the opening direction of the valve.

8. A nozzle cutoff valve as claimed in claims 1 and 3-7, characterized in that there is a filter (16) before the inlet duct (27) that is preferably made of sintered metal.

9. A nozzle cutoff valve as claimed in claim 8, characterized in that the individual elements comprise an annular valve casing (19) that is sealed on one side by the tightly seated filter (16), an inner part (20) is inserted into the valve casing (19) which contains the inlet duct (27) as a concentric through hole, rests on the input side on the filter (16) and is equipped on the output side with the valve seat (28), a valve screw (18) is screwed into the valve casing (19) which comprises the spring chamber (29), the membrane seat (31) which follows it and the outlet (24) exiting sideways before the membrane seat, and which screw fixes the inner part (20) in the valve casing (19) when screwed in, and the valve casing (19) is provided with an outside thread (30) with which it can be screwed into the pressure spray nozzle (1).

10. A nozzle cutoff valve as claimed in claim 9, characterized in that the inner part (20) is sealed against the valve casing (19) by an O-ring (26).

11. A pressure spray nozzle (1) for an oil burner, which pressure spray nozzle (1) comprises a nozzle casing (2) which encloses an inner chamber (6) in the form of a blind hole, the inner chamber (6) connects to the outside by a nozzle bore (4) at the floor of the blind hole, characterized in that a nozzle cutoff valve (14) as claimed in one of claims 1, 3-10 is inserted into the inner chamber (6) so that the nozzle casing (2) is coaxial to the valve axis (32) of the nozzle spray valve (14) and is sealed from the nozzle spray valve (14).

12. A pressure spray nozzle as claimed in claim 11, characterized in that the nozzle cutoff valve (14) is screwed into the nozzle casing (2) and sealed against the nozzle casing (2) with an O-ring (15).

## Revendications

1. Soupape d'arrêt pour tuyère (14) pour la tuyère du pulvérisateur à haute pression (1) d'un brûleur à combustible, comprenant un côté d'admission (20, 27) avec un conduit d'admission (27) et un siège de soupape (28) situé à l'extrémité du conduit d'admission (27), ainsi qu'un élément d'arrêt (23), lequel est appuyé de manière étanche contre le siège de soupape (28) au moyen d'un premier ressort (21) placé derrière l'élément de soupape (23) et se soulève contre la force du premier ressort (21) du siège de soupape (28) lorsqu'on atteint une pression prédéterminée dans le conduit d'admission (27), la soupape d'arrêt pour tuyère (14) étant composée d'éléments individuels (16, 18, 19, 20, 22, 23) essentiellement à symétrie de révolution et disposés de façon concentrique par rapport à un axe de soupape (32), et la soupape d'arrêt pour tuyère (14) pouvant être insérée dans une enveloppe de tuyère (1) de la tuyère du pulvérisateur à haute pression (1) de telle manière que l'enveloppe de tuyère (2) peut être disposée de façon coaxiale par rapport à l'axe de soupape (32) de la soupape d'arrêt pour tuyère (14), caractérisé en ce que l'organe d'arrêt a la forme d'un diaphragme (23), le premier ressort (21) présente une caractéristique de ressort essentiellement linéaire, et le premier ressort est placé dans un espace pour ressort (29), lequel a la forme d'un espace ouvert d'un seul côté et dont l'unique ouverture est fermée hermétiquement par le diaphragme (23).

2. Tuyère de pulvérisation à haute pression avec une enveloppe de tuyère et une soupape d'arrêt pour tuyère selon la revendication 1, caractérisée en ce que l'enveloppe de tuyère (2) et la soupape d'arrêt pour tuyère (14) sont rendues étanches réciproquement par un joint torique (15).

3. Soupape d'arrêt pour tuyère selon la revendication 1, caractérisée en ce que l'ouverture de l'espace pour ressort (29) est entourée d'un siège circulaire pour diaphragme (31) sur lequel repose la partie périphérique arrière du diaphragme (23), et en ce que le diaphragme (23) est pressé contre le siège de diaphragme (31) au moyen d'un second ressort (25).

4. Soupape d'arrêt pour tuyère selon la revendication 3, caractérisée en ce qu'une bague intermédiaire (33), métallique de préférence, est disposée entre le diaphragme (23) et le deuxième ressort (25).

5. Soupape d'arrêt pour tuyère selon l'une quelconque des revendications 1 et 3, 4, caractérisée en ce que le premier ressort (21) a la forme d'un ressort spiral et agit sur un boulon de pression (22, 22'), dont un des fronts exerce à son tour une pression sur le diaphragme (23).

6. Soupape d'arrêt pour tuyère selon la revendication 5, caractérisée en ce que le front du boulon de pression (22, 22') est de forme convexe.

7. Soupape d'arrêt pour tuyère selon l'une quelconques des revendications 5 et 6, caractérisée en ce que la trajectoire de déplacement du boulon de pression (22') est limitée dans le sens d'ouverture de la soupape.

8. Soupape d'arrêt pour tuyère selon l'une quelconque des revendications 1 et 3 à 7, caractérisée en ce qu'on a placé un filtre (16), de préférence en métal fritté, en amont de la conduite d'admission (27).

9. Soupape d'arrêt pour tuyère selon la revendication 8, caractérisée en ce que les éléments individuels comprennent une cage de soupape (19) en forme de bague cylindrique, qui est fermée d'un côté au moyen du filtre (16) qui est monté fixement, on a prévu dans la cage de soupape (19) une partie interne (20) contenant la conduite de passage (27) sous la forme d'un alésage de passage concentrique, s'appuyant sur le filtre (16) du côté de l'entrée et équipée du siège de soupape (28) du côté de la sortie on a vissé dans la cage de soupape (19) une vis de soupape (18) renfermant l'espace de ressort (29), le siège de diaphragme (31) et l'échappement (24) partant latéralement en amont du siège du diaphragme, cette vis, lorsqu'elle est serrée, fixant la partie interne (20) dans la cage de soupape (19) et la cage de soupape (19) présente un filetage mâle (30) permettant de la visser dans la tuyère du pulvérisateur à haute pression (1).

10. Soupape d'arrêt pour tuyère selon la revendication 9, caractérisée en ce que la partie interne (20) est rendue étanche par rapport à la cage de soupape (19) au moyen d'un joint torique (26).

11. Tuyère de pulvérisateur à haute pression (1) pour un brûleur à combustible, laquelle présente une enveloppe de tuyère (2) cernant un espace intérieur (6) ayant la forme d'un trou borgne, cet espace intérieur (6) étant relié avec l'espace extérieur à la hauteur du fond du trou au moyen d'un trou de tuyère (4), caractérisée en ce qu'on insère dans l'espace intérieur (6) une soupape d'arrêt pour tuyère (14) suivant l'une quelconque des revendications 1 et 3 à 10 de telle façon que l'enveloppe de tuyère (2) est placée sur le même axe que l'axe (32) de la soupape d'arrêt pour tuyère (14) et est rendue étanche par rapport à la soupape d'arrêt pour tuyère (14).

12. Tuyère de pulvérisateur à haute pression selon la revendication 11, caractérisée en ce que la soupape d'arrêt (14) est vissée dans l'enveloppe de tuyère (2) et rendue étanche par rapport à celle-ci au moyen d'un joint torique (15).
